Europäisches Patentamt

European Patent Office

Office européen des brevets

(11) Publication number: **0 343 929 B1**

# EUROPEAN PATENT SPECIFICATION

(45) Date of publication of patent specification: **04.05.94**

(51) Int. Cl.5: **G11B 20/10**, H04L 25/497, H04N 5/92, G11B 20/14, H04N 5/782

(21) Application number: **89305207.6**

(22) Date of filing: **23.05.89**

(54) **Digital signal decoding apparatus.**

(30) Priority: **25.05.88 JP 127888/88**

(43) Date of publication of application:
**29.11.89 Bulletin 89/48**

(45) Publication of the grant of the patent:
**04.05.94 Bulletin 94/18**

(84) Designated Contracting States:
**DE FR GB NL**

(56) References cited:
**US-A- 4 620 158**

**JOURNAL OF THE INSTITUTION OF ELECTRONIC AND RADIO ENGINEERS. vol. 55, no. 6, June 1985, LONDON GB & Al.: "High data rate magnetic recording in a single channel"**

(73) Proprietor: **SONY CORPORATION**
**7-35 Kitashinagawa 6-chome**
**Shinagawa-ku**
**Tokyo 141(JP)**

(72) Inventor: **Kanota, Keiji c/o Patents Division**
**Sony Corporation**
**6-7-35 Kitashinagawa**
**Shinagawa-ku**
**Tokyo 141(JP)**
Inventor: **Inoue, Hajime c/o Patents Division**
**Sony Corporation**
**6-7-35 Kitashinagawa**
**Shinagawa-ku**
**Tokyo 141(JP)**
Inventor: **Seki, Takahito c/o Patents Division**
**Sony Corporation**
**6-7-35 Kitashinagawa**
**Shinagawa-ku**
**Tokyo 141(JP)**

(74) Representative: **Pilch, Adam John Michael et al**
**D. YOUNG & CO.,**
**21 New Fetter Lane**
**London EC4A 1DA (GB)**

EP 0 343 929 B1

## Description

This invention relates to apparatus for decoding a digital signal, which apparatus may be used in a digital video tape recorder or the like.

In a digital magnetic recording and/or reproducing apparatus such as a video tape recorder (VTR), if a digital data series (represented in the binary form of "1" or "0") is directly recorded, the following problems arise.

1. The maximum frequency of a recorded signal is increased to such an extent that the recorded signal cannot be read.

2. Direct current components and low frequency components frequently appear in the recorded signal so that, when a digital signal is recorded and reproduced by a head system utilising a rotary transformer, distortion occurs in the reproduced signal. As a result, it frequently occurs that the reproduced information deviates considerably from the recorded information.

3. When digital data is recorded, a data series is generally recorded together with a clock component, according to the so-called self-clock system. If a digital "1" or "0" is recorded in succession or contiguously, then the error rate in extracting the clock component on the playback side will be increased.

In order to solve the above-mentioned problems, it has been proposed to arrange a digital magnetic recording and reproducing apparatus so that, upon recording, a digital input signal is converted to a recording signal having a predetermined frequency characteristic by a channel coding (recording and encoding) circuit. This recording signal is then recorded on a magnetic recording medium by a recording head. Upon playback, a signal reproduced from the magnetic recording medium by a playback head is supplied to and is reproduced by a decoder whose converting characteristic is opposite to that of the channel coding circuit. The channel coding system may be a non-return to zero-inverted (NRZ-I) system, an interleaved NRZ-I (I-NRZ-I) system, or a scrambled I-NRZ-I (S-I-NRZ-I) system based on a partial response (PR) system which makes effective use of intersymbol interference in the digital recording process.

According to the NRZ-I system, an NRZ signal of binary code form is converted to an HRZ-I recording signal. An encoder converts the input signal to the recording signal just before the transmission line, and this encoder may be called a precoder. The NRZ-I system precoder is called a PR (1, -1) encoder because it effects the coding that is the conversion opposite to the conversion of a PR (1, -1) transmission line based on the partial response system. The NRZ-I system has, on the other hand, the disadvantage that when the signal is not inverted, a direct current component frequently appears in the recording signal.

According to the I-NRZ-I system, an NRZ signal is converted to an I-NRZ-I recording signal. The I-NRZ-I system precoder performs a conversion which is the reverse of that in a PR (1, 0, -1) transmission line based on the so-called class IV partial response, and is called a PR (1, 0, -1) encoder or a class IV partial response encoder.

An identifying signal, which results from recording and reproducing the I-NRZ-I recording signal, has frequency characteristics similar to those of the magnetic recording and reproducing system so that it contains fewer high frequency components and does not contain direct current (DC) components. In addition, the identifying signal cannot be affected by the cross-talk component caused by the increased wavelength of the recording signal and also it cannot be affected by the rotary transformer of the head system.

Although the identifying signal reproduced according to the I-NRZ-I system does not contain direct current components, the recording signal does contain direct current components. In order to reduce the direct current component of the recording signal, the S-I-NRZ-I system has been proposed. According to the S-I-NRZ-I system, by adding an M series signal (represented in the form of a binary random number) to the input signal in modulo (mod.) 2, or by scrambling the input signal by the M series signal, it is possible to reduce the direct current components.

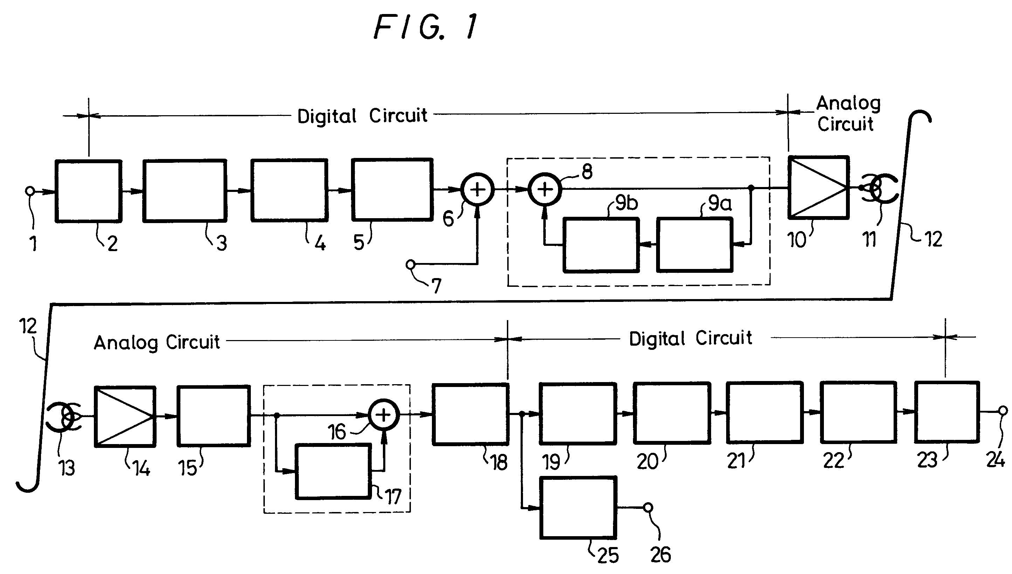

Figure 1 of the accompanying drawings is a block diagram showing an arrangement of a previously-proposed digital VTR using the above-mentioned channel coding circuit of the S-I-NRZ-I system. Referring to Figure 1, it will be seen that an analog video signal is supplied to an input terminal 1. This analog video signal is supplied to an analog-to-digital (A/D) converter 2, in which it is converted to a digitised data signal. The digitised data signal is supplied through a bit reduction encoder 3 to an error correction code (ECC) encoder 4, in which it is encoded to have a parity code for error correction. The data signal with parity code is supplied to an M scramble circuit 5 and is thereby converted, for example, to a signal having no DC components corresponding to a characteristic of a head-tape system which will be described later. The M scramble circuit 5 utilises a so-called M series signal as a pseudo-random signal. The signal thus converted is supplied to an adder 6, whereby it is added with a synchronising (SYNC) code from a terminal 7.

The converted signal with synchronising code is supplied to an adder 8, and the output signal of the adder 8 is fed through delay elements 9a and 9b back to the adder 8. Each of the delay elements 9a and 9b has a sampling cycle D. The adder 8 and the delay elements 9a and 9b constitute a class IV partial response (PR) (1, 0, -1) precoder shown by a broken line in Figure 1, thereby effecting processing of $[1/(1-D^2)]$ according to the class IV partial response system.

The signal from the adder 8 is supplied through a recording amplifier 10 to a recording head 11 and is thereby recorded on a tape 12.

The recorded signal is reproduced from the tape 12 by means of a playback head 13 and a playback amplifier 14. The electromagnetic transducing system formed of the recording head 11, the tape 12 and the playback head 13 has a characteristic of [1 - D].

The signal from the playback amplifier 14 is supplied through an equaliser 15 to an adder 16, and the signal from the equaliser 15 is also supplied through a delay element 17 having a sampling cycle D to the adder 16. The adder 16 and the delay element 17 constitute a class IV PR (1, 1) decoder as shown by a broken line block in Figure 1. Accordingly, when the characteristic [1 - D] of the electromagnetic transducing system formed by the recording head 11, the tape 12 and the playback head 13 is combined with the characteristic [1 + D] of the class IV PR (1, 1) decoder formed of the adder 16 and the delay element 17, this results in the overall characteristic $[1 - D^2]$. This overall characteristic $[1 - D^2]$ is complementary to the characteristic $[1/(1-D^2)]$ of the above-mentioned class IV PR (1, 0, -1) decoder. Accordingly, the following equation is established:

$$[1/(1-D^2)] \times (1 - D) \times (1 + D) = 1$$

Thus, transmission with a transfer function "1" is carried out, and a ternary signal (1, 0, -1) of the class IV partial response system is generated.

This ternary signal is supplied to a ternary signal comparator 18 from which there is decoded a signal which is not yet precoded in the recording mode. The decoded signal is supplied through an M descramble circuit 19 to a time base corrector 20, in which it is timebase-corrected. The signal from the time base corrector 20 is supplied through a bit reduction decoder 22 to a digital-to-analog (D/A) converter 23, in which it is converted to an analog video signal. This analog video signal is supplied to an output terminal 24.

The signal from the ternary signal comparator 18 is also supplied to a synchronising (SYNC) code detecting circuit 25, and the detected synchronising code is supplied to a terminal 26.

In the digital circuit system formed of the circuit elements from the A/D converter 2 to the D/A converter 23 of the previously-proposed digital VTR shown in Figure 1, the video signal is processed in a digital fashion in the recording system from the A/D converter 2 to the class IV PR (1, 0, -1) precoder formed of the adder 8 and the delay elements 9a and 9b, whereas the video signal is then processed in an analog fashion in the reproducing system from the playback head 13 to the ternary comparator 18. The video signal is subsequently processed in a digital fashion by the circuit system from the M descramble circuit 19 to the D/A converter 23.

Hence, the equaliser 15, the adder 16 and the delay element 17 form a decoder system which processes the video signal in an analog fashion. In analog data processing, error may occur in the data signal due to temperature characteristic and aging changes.

Further, the delay element 17 forming the class IV partial response (1, 1) decoder is formed of an analog delay line so that the delay time of the delay element 17 cannot be varied without difficulty. As a result, when the transmission rate is changed upon cue or review playback modes, it is difficult to vary the sampling frequency in accordance with the changed transmission rate.

In order to solve the above-mentioned problems, it has been proposed that the output signal from the playback amplifier 14 may be converted into digital form, whereupon the circuit elements from the equaliser 15 to the ternary signal comparator 18 can perform the required processing in a digital manner. Digital processing generally requires a sampling frequency twice as high as the transmission rate of a transmission signal, from a sampling theorem standpoint. A digital VTR or the like, in particular, therefore requires a very high sampling frequency, which cannot readily be realised in practice.

According to the present invention there is provided an apparatus for decoding a transmitted digital signal, which signal has been precoded in accordance with a class IV partial response method, the apparatus comprising: receiver means for receiving said transmitted digital signal; low-pass filter means for limiting the frequency of the output of said receiver means, the cut-off frequency of said filter means being the Nyquist frequency of said digital signal; generator means for generating a clock signal with a frequency equal to the transmission rate of said digital signal from the output of said receiver means; converter means for sampling the output of said filter means by said clock signal and thereby producing a binary signal; and processing means, comprising a class IV partial response decoder, for processing the output of said converter means to decode said transmitted digital signal in accordance with said class IV partial response method.

A preferred embodiment of the present invention, to be described in greater detail hereinafter, provides an apparatus for decoding a digital signal which can overcome the above-mentioned defects of the previously-proposed system. In the preferred apparatus, a signal can be digitally processed in an equaliser or the like at the first stage. The preferred apparatus can reduce influences exerted by temperature characteristic and/or aging changes or the like, and can carry out the reproducing process accurately.

The decoding apparatus may use a data latch as a delay element instead of an analog delay line, thereby increasing accuracy from a design standpoint and also resulting in a reduced manufacturing cost.

The preferred apparatus is capable of coping with the cue playback mode and the review playback mode.

The circuit elements of the apparatus can be fabricated as an integrated circuit (IC) with ease, and provide a highly-efficient circuit arrangement.

The invention will now be described by way of example with reference to the accompanying drawings, throughout which like parts are referred to by like references, and in which:

Figure 1 is a block diagram showing an example of a previously-proposed digital VTR;

Figure 2 is a diagram of the frequency spectrum of a reproduced signal used to explain operation of the present invention; and

Figure 3 is a block diagram of an apparatus for decoding a digital signal according to an embodiment of the present invention.

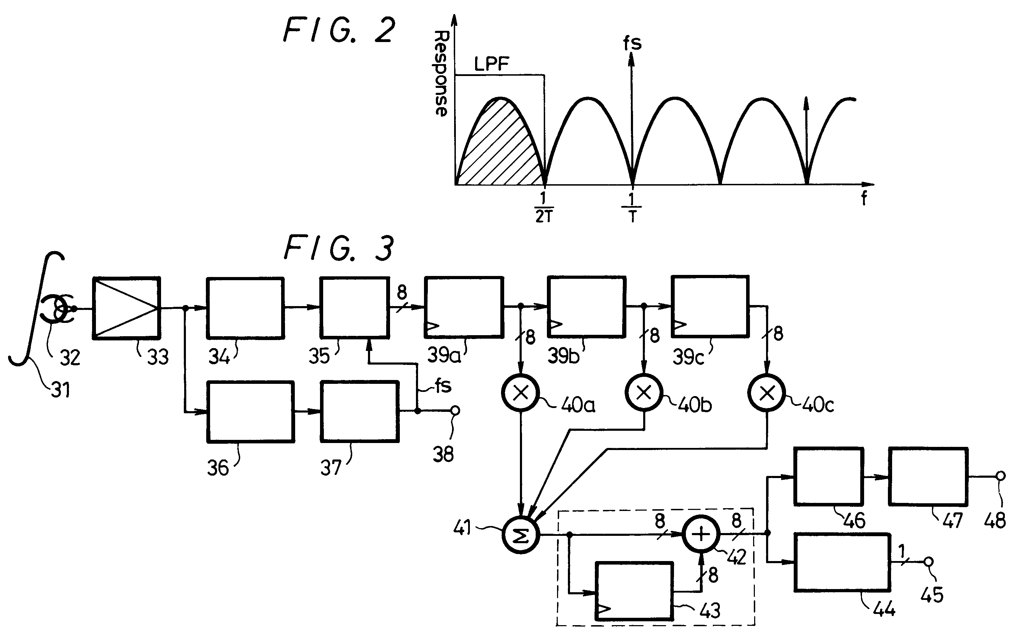

When a class IV partial response system is used as the recording and reproducing system in a digital VTR or the like, the frequency spectrum of the reproduced signal may be represented as shown in Figure 2, in which 1/2T is the Nyquist frequency and 1/T is the transmission rate.

Referring to Figure 3 which shows an embodiment of the present invention, there is shown a tape 31 on which a video signal is recorded according to the class IV partial response system. The recorded signal is reproduced from the tape 31 by means of a playback head 32 and a playback amplifier 33. The signal from the playback amplifier 33 is supplied to a low-pass filter 34 whose cut-off frequency (LPF in Figure 2) corresponds to the Nyquist frequency of the recorded signal. The signal from the low-pass filter 34 is supplied to an analog-to-digital (A/D) converter 35, in which it is converted to a digital signal. The signal from the playback amplifier 33 is also supplied through a multiply-by-2 circuit 36 to a phase-locked loop circuit 37 which generates a clock signal with a frequency fs equal to the transmission rate. This clock signal is supplied to a terminal 38 as well as to the A/D converter 35. Hence, the A/D converter 35 generates a digitised signal of, for example, 8 bits in response to the clock signal at the transmission rate frequency fs.

The apparatus utilises the class IV partial response system so that, even when the sampling is effected by the clock signal with the frequency fs equal to the transmission rate, then the problem of so-called aliasing noise or the like can be avoided.

The digitised signal from the A/D converter 35 is supplied to serially-connected data latch circuits 39a to 39c. The clock signal is also supplied to the serially-connected data latch circuits 39a to 39c so that the data latch circuits 39a to 39c generate signals each delayed by the sampling cycle D (transmission rate). These signals are weighted by predetermined weight ratios by respective weighting circuits 40a to 40c, and are then added together by an adder 41.

The circuit arrangement formed from the latch circuit 39a up to the adder 41 constitutes a transversal filter. Thus, a desired equalising characteristic can be presented by freely determining the coefficients of the weighting circuits 40a to 40c.

The signal from the adder 41 is supplied to an adder 42 and is also supplied to a data latch circuit 43. The clock signal is supplied to the data latch circuit 43, and the output signal of the data latch circuit 43 is supplied to the adder 42, whereby the adder 42 and the data latch circuit 43 constitute a class IV PR (1, 1) decoder as shown by a broken line block in Figure 3, thereby performing decoding which may be expressed as [1 + D].

The signal from the adder 42 is supplied to a digital ternary signal comparator 44, and the compared output signal of one bit is fed to a terminal 45.

The signal developed at the terminal 45 is supplied to the M descramble circuit 19 (see Figure 1) which reproduces or descrambles the video signal.

As described above, according to this embodiment of the present invention, since the video signal can be digitally processed by the equaliser and the like at the first stage of the apparatus, influences due to temperature characteristics, aging changes and the like can be reduced. Hence, the apparatus embodying the invention can reproduce the digital signal satisfactorily.

Since in the above embodiment the data latch circuit is utilised as the delay element, the analog delay line can be dispensed with, which provides increased accuracy from a design standpoint and also a reduced cost from a manufacturing process standpoint. Further, the circuit elements of the apparatus can cope with the cue playback mode and the review playback mode with ease.

Furthermore, the circuit elements of the apparatus can be fabricated as an integrated circuit (IC) and can be logically designed, which provides a highly-effective circuit operating with high performance.

In addition, in the circuit arrangement of Figure 3, the output signal of the adder 42 can be converted to an analog signal by a D/A converter 46, and the analog signal can be supplied through a low-pass filter 47 to a terminal 48, whereby an analog eye pattern can be monitored.

## Claims

1. Apparatus for decoding a transmitted digital signal, which signal has been precoded in accordance with a class IV partial response method, the apparatus comprising:

   receiver means (32, 33) for receiving said transmitted digital signal;

   low-pass filter means (34) for limiting the frequency of the output of said receiver means (32, 33), the cut-off frequency of said filter means (34) being the Nyquist frequency of said digital signal;

   generator means (36, 37) for generating a clock signal with a frequency (fs) equal to the transmission rate of said digital signal from the output of said receiver means (32, 33);

   converter means (35) for sampling the output of said filter means (34) by said clock signal and thereby producing a binary signal; and

   processing means (39a to 44), comprising a class IV partial response decoder (42, 43), for processing the output of said converter means (35) to decode said transmitted digital signal in accordance with said class IV partial response method.

2. Apparatus according to claim 1, wherein said receiver means comprises a magnetic head (32) and said digital signal is transmitted through a magnetic medium (31) by recording.

3. Apparatus according to claim 1 or claim 2, wherein said processing means includes an equaliser (39a to 41).

4. Apparatus according to claim 3, wherein said equaliser is a transversal filter (39a to 41).

## Patentansprüche

1. Vorrichtung zur Decodierung eines übertragenen digitalen Signals, wobei dieses Signal in Übereinstimmung mit einem teilweise ansprechenden Verfahren der Klasse IV vorcodiert worden ist, wobei die Vorrichtung umfaßt:

   eine Empfangseinrichtung (32, 33) zum Empfang des übertragenen empfangenen Signals;

   eine Tiefpaßfiltereinrichtung (34) zum Begrenzen der Frequenz des Ausgangssignals der Empfangseinrichtung (32, 33), wobei die Grenzfrequenz der Filtereinrichtung (34) die Nyquist-Frequenz des digitalen Signals ist;

   eine Generatoreinrichtung (36, 37) zum Erzeugen eines Taktsignals mit einer Frequenz (fs), welche gleich der Übertragungsrate des digitalen Signals von dem Ausgang der Empfangseinrichtung (32, 33) ist;

   eine Umsetzungseinrichtung (35) zum Abtasten des Ausgangssignals der Filtereinrichtung (34) mittels des Taktsignals und auf diese Weise zum Erzeugen eines Binärsignals; und

   eine Verarbeitungseinrichtung (39a bis 44), welche einen teilweise ansprechenden Decoder (42, 43) der Klasse IV zum Verarbeiten des Ausgangssignals der Umsetzungseinrichtung (35) enthält, um das übertragene digitale Signal in Übereinstimmung mit dem teilweise ansprechenden Verfahren der Klasse IV zu decodieren.

2. Vorrichtung nach Anspruch 1, bei der die Empfangseinrichtung einen Magnetkopf (32) enthält und das digitale Signal durch einen magnetischen Träger (31) mittels Aufzeichnung übertragen wird.

3. Vorrichtung nach Anspruch 1 oder 2, bei der die Verarbeitungseinrichtung eine Entzerrerschaltung (39a bis 41) enthält.

4. Vorrichtung nach Anspruch 3, bei der die Entzerrerschaltung ein Transversalfilter (39a bis 41) ist.

## Revendications

1. Appareil pour décoder un signal numérique transmis, lequel signal a été précodé selon une méthode de réponse partielle de classe IV, l'appareil comprenant:

   Un dispositif de réception (32,33) pour recevoir ledit signal numérique transmis;

   Un dispositif de filtre de passe-bas (34) pour limiter la fréquence de sortie dudit dispositif de réception (32,33), la fréquence de coupure dudit dispositif de filtrage (34) étant la fréquence de Nyquist dudit signal;

   Un dispositif générateur (36,37) pour générer un signal d'horloge (fs) égal à la vitesse de transmission dudit signal numérique à partir de la sortie dudit dispositif de réception (32,33);

   Un dispositif convertisseur (35) pour échantillonner la sortie dudit dispositif de filtrage (34) par ledit signal d'horloge et produisant ainsi un signal binaire; et

un dispositif de traitement (39a à 44), comprenant un décodeur de réponse partielle de classe IV (42,43) pour traiter la sortie dudit dispositif convertisseur (35) pour décoder ledit signal numérique transmis selon ladite méthode de réponse partielle de classe IV.

2. Appareil selon la revendication 1, dans lequel ledit dispositif de réception comprend une tête magnétique (32) et ledit signal numérique est transmis via un support magnétique (31) lors de l'enregistrement.

3. Appareil selon la revendication 1 ou la revendication 2, dans lequel ledit dispositif de traitement comprend l'égaliseur (39a à 41).

4. Appareil selon la revendication 3, dans lequel ledit égaliseur est un filtre transversal (39a à 41).

# FIG. 1

EP 0 343 929 B1

FIG. 2

FIG. 3